# EUROPÄISCHE PATENTANMELDUNG

(11) **EP 0 779 313 A2**
(43) Veröffentlichungstag der Anmeldung: **18.06.1997**
(21) Anmeldenummer: 96119144.2
(22) Anmeldetag: 29.11.1996
(51) Int. Cl.: C08G 65/46

(54) **Verfahren zur Reinigung von Polyarylenethern mit Wasser**

(30) Priorität: 11.12.1995 DE 19545968
(71) Anmelder: BASF AKTIENGESELLSCHAFT, 67056 Ludwigshafen (DE)
(72) Erfinder: Heitz, Thomas, Dr., 67125 Dannstadt-Schauernheim (DE); Hofmann, Jürgen, 67069 Ludwigshafen (DE); Koch, Jürgen, Dr., 67141 Neuhofen (DE)

(57) **Zusammenfassung**

Verfahren zur Reinigung von Polyarylenethern, dadurch gekennzeichnet, daß man in einem ersten Schritt eine Polyarylenetherschmelze herstellt, in einem zweiten Schritt zu dieser bis zu 1,5 Gew.-% Wasser, bezogen auf die Polyarylenetherschmelze, zugibt und in einem dritten Schritt das Wasser zusammen mit den Verunreinigungen entfernt.

## Beschreibung

Die vorliegende Erfindung betrifft ein Verfahren zur Reinigung von Polyarylenethern.

Polyarylenether, insbesondere jedoch Polyarylenetherketone, die durch elektrophile Polykondensation hergestellt werden, enthalten als Verunreinigungen vor allem Halogenwasserstoffe, zumeist HCl. Ferner können Ammoniumsalze wie Ammoniumchlorid, Ammoniumbromid oder Trialkylanmoniumchlorid in so hergestellten Polyarylenetherketonen enthalten sein. Darüberhinaus zählen Wasserstoff-, Alkyl- oder Arylverbindungen von Elementen der V.ten und VI Hauptgruppe des Periodensystems zu den Verunreinigungen, die in den Polyarylenethern enthalten sein können. Darunter sind vor allem Ammoniak, Arylamine oder Arylalkylamine zu nennen. Diese Verunreinigungen führen zum einen dazu, daß die Polyarylenether eine geringere Stabilität in der Schmelze aufweisen. Zum anderen bedingen die Verunreinigungen, daß die Eigenfarbe der Polyarylenether sowie der daraus hergestellten Formteile oder Gegenstände dunkel ist.

In der EP-A2-480 244 wird beschrieben, daß Polyphenylenether in Gegenwart von Carbonsäuren und Wasser bei vermindertem Druck in der Schmelze kompoundiert werden können, was dazu führt, daß Geruchsstoffe aus den Polymeren entfernt werden.

Aus der US-A 4 874 839 war bekannt, Rohpolyarylenether noch vor dem ersten Aufschmelzen mit vorzugsweise großen Mengen Wasser zu versetzen oder mit Wasserdampf zu behandeln und diese Mischung in einem Autoklaven zu erhitzen, um Verunreinigungen aus dem Rohpolymeren zu entfernen. Dieses Verfahren ist jedoch technisch aufwendig. Außerdem muß zumeist über einen langen Zeitraum erhitzt werden.

Aufgabe der vorliegenden Erfindung war es deshalb, ein Verfahren zur Reinigung von Polyarylenethern und insbesondere durch elektrophile Polykondensation hergestellten Polyarylenetherketonen zur Verfügung zu stellen, das die genannten Nacheile nicht aufweist und wonach Polyarylenether mit guter Schmelzestabilität erhältlich sind.

Diese Aufgabe wurde durch das erfindungsgemäße Verfahren gelöst, das sich dadurch auszeichnet, daß man in einem ersten Schritt eine Polyarylenetherschmelze herstellt, in einem zweiten Schritt zu dieser bis zu 1,5 Gew.-% Wasser, bezogen auf die Polyarylenetherschmelze, zugibt und in einem dritten Schritt das Wasser zusammen mit den Verunreinigungen entfernt.

Mit dem erfindungsgemäßen Verfahren lassen sich prinzipiell alle Polyarylenether, jedoch insbesondere Polyarylenetherketone, die durch elektrophile Polykondensation erhältlich sind, reinigen. Zu den bevorzugten Polyarylenethern zählen solche, die sich wiederholende Einheiten der allgemeinen Formel I 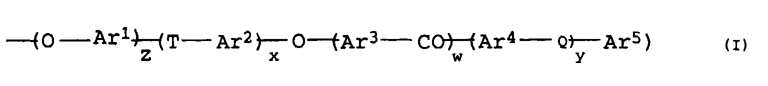 enthalten.

Darin können Ar¹ bis Ar⁵ gleich oder verschieden voneinander sein und unabhängig voneinander einen aromatischen Rest mit 6 bis 18 C-Atomen bedeuten. Beispiele geeigneter Reste Ar¹ bis Ar⁵ sind 1,2-Phenylen, 1,3-Phenylen, 1,4-Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, C₁- bis C₁₀-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor. T und Q können gleich oder verschieden voneinander sein und unabhängig voneinander -O-, -S-, -SO₂-, -CO- oder -COO- bedeuten, worunter -CO- und -O- bevorzugt ist.

Die Variablen w bis z können gleich oder verschieden voneinander sein und unabhängig voneinander eine ganze Zahl von 0 bis 3 bedeuten. Bevorzugt ist w nicht gleich 0

Als Beispiele bevorzugter Polyarylenetherketone sind solche zu nennen, die sich wiederholende Einheiten ausgewählt aus der Gruppe der Einheiten II 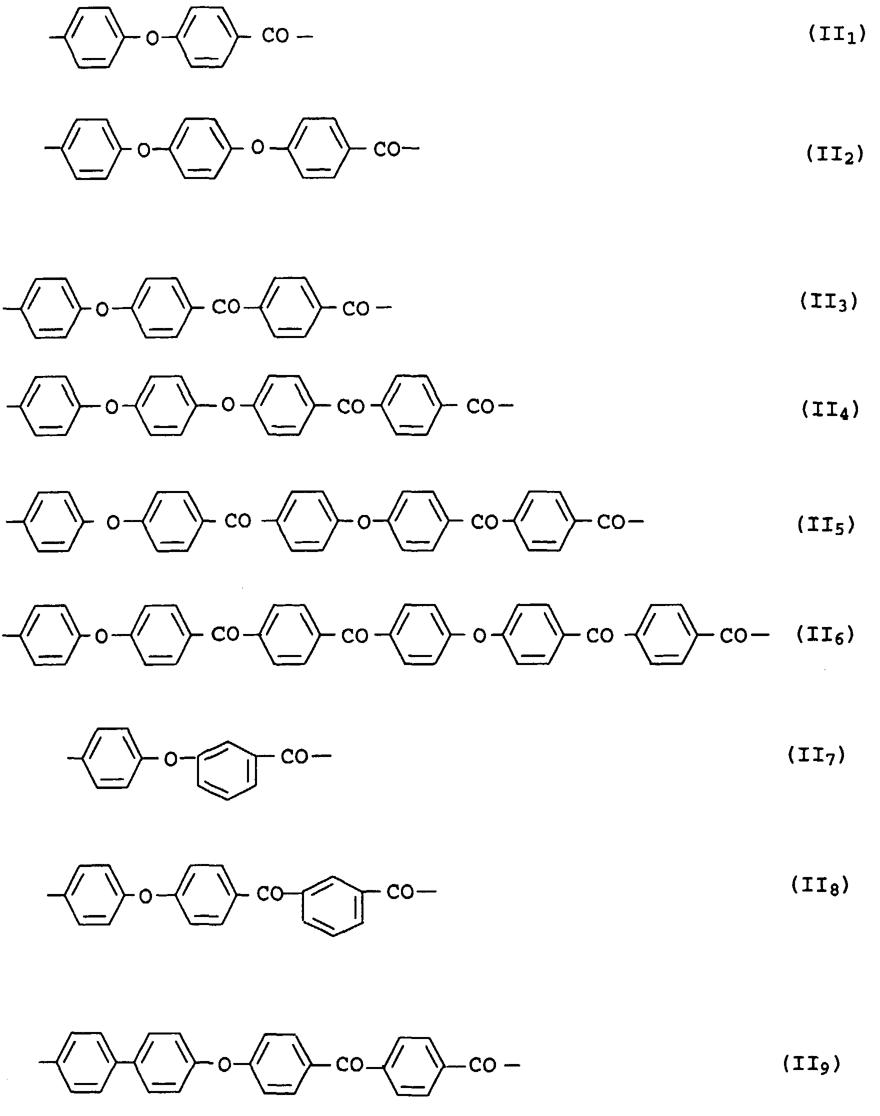 allein oder in Verbindung mit anderen Einheiten enthalten.

Die Polyarylenether können auch statistische oder geordnete Copolymere wie alternierende oder Blockcopolymere sein. Es können auch Mischungen unterschiedlicher Polyarylenether verwendet werden. In der Regel weisen die bevorzugten Polyarylenetherketone Schmelzvolumenindices (MVI) von 5 bis 350 cm³/10 min (gemessen nach DIN 53 735, bei 400^{o}C und einer Belastung von 10 kg) auf. Bevorzugt werden Polyarylenetherketone mit Schmelzvolumenindices von 25 bis 250 cm³/10 min (gemessen nach DIN 53 735, bei 400^{o}C und einer Belastung von 10 kg). In der Regel betragen die reduzierten Viskositäten der Polyarylenetherketone 30 bis 170 ml/g, bevorzugt 50 bis 150 ml/g, besonders bevorzugt 80 bis 140 ml/g. Die reduzierten Viskositäten werden je nach Löslichkeit der Polyarylenetherketone entweder in 1 gew.-%iger N-Methylpyrrolidon-Lösung, in Mischungen aus Phenol und Dichlormethan oder in 96 %iger Schwefelsäure bei jeweils 20^{o}C bzw. 25^{o}C gemessen.

Die in Betracht kommenden Polyarylenether sind an sich bekannt oder können nach an sich bekannten Methoden hergestellt werden. So sind z.B. Polyarylenetherketone durch elektrophile (Friedel-Crafts-)Polykondensation zugänglich, wie unter anderem in der WO 84/03892 beschrieben. Bei der elektrophilen Polykondensation werden zur Bildung der Carbonylbrücken entweder Dicarbonsäurechloride oder Phosgen mit Aromaten, welche zwei - durch elektrophile Substituenten austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Die so hergestellten Polyarylenetherketone werden im allgemeinen durch Waschen mit geeigneten Lösungsmitteln, vor allem Wasser oder Alkoholen wie Methanol oder Ethanol gereinigt und anschließend getrocknet und fallen in Form von Flocken an.

In der Regel enthalten die so behandelten Polyarylenetherketone zumeist mehr als 150 ppm Chlordionen.

Erfindungsgemäß wird in einem ersten Schritt eine Polyarylenetherschmelze hergestellt. Hierzu wird bevorzugt getrocknetes Polyarylenethermaterial, insbesondere getrocknetes Produkt, wie es nach der Herstellung anfällt, eingesetzt. Besonders bevorzugt werden getrocknete Polyarylenetherketonflocken verwendet. Im allgemeinen liegen die Temperaturen der Schmelze im Bereich von 330 bis 460^{o}C, insbesondere von 340 bis 420^{o}C

In einem zweiten Schritt wird zu der Polyarylenetherschmelze bis zu 1,5 Gew.-% Wasser, bezogen auf die Polyarylenetherschmelze gegeben. Bevorzugt liegt die Wassermenge, die zugegeben wird, im Bereich von 0,01 bis 1,5 Gew.-% Wasser, bezogen auf die Polyarylenetherschmelze. Besonders bevorzugt wird Wasser in Mengen von 0,1 bis 1,2 Gew.-%, insbesondere von 0,2 bis 1 Gew.-%, bezogen auf die Polyarylenetherschmelze zugegeben. Dabei wird das Wasser in der Regel über eine Düse mittels Druck dampfförmig zu der Schmelze dosiert. Im allgemeinen liegen die Drucke, die während des zweiten Verfahrensschrittes auftreten, im Bereich von 1,1 bis 60, insbesondere im Bereich von 1,5 bis 10 bar.

Erfindungsgemäß wird in einem dritten Schritt das Wasser zusammen mit den Verunreinigungen aus der Schmelze entfernt. Das Wasser kann der Schmelze entweder bei Atmosphärendruck, d.h. drucklos oder bei einem gegenüber Atmosphärendruck reduzierten Druck entzogen werden. Bevorzugt werden Drucke von 0,1 bis 0,99 bar, insbesondere von 0,5 bis 0,95 bar. Im allgemeinen wird das Wasser dampfförmig entnommen.

In der Regel sind die Zeiten zwischen der Zugabe und der Entnahme des Wassers kurz und überschreiten 10 Minuten in der Regel nicht wesentlich. Im allgeminen betragen die Verweilzeiten des Wassers von 0,5 bis 8, bevorzugt von 1 bis 5 Minuten.

Das erfindungsgemäße Verfahren wird bevorzugt in einem Kneter z.B. einem Zweischneckenkneter oder einem Extruder durchgeführt. Als Extruder kommen Einschneckenextruder oder Zweischneckenextruder in Betracht. Darunter können beispielsweise gegenläufig tangentiale, gegenläufig kämmende oder gleichläufig kämmende Zweischneckenextruder verwendet werden.

Bevorzugte Extruder weisen eine Zone auf, in der zunächst der Polyarylenether erwärmt und in die Schmelze überführt wird. Daran schließt sich eine Extraktionszone an, in deren vorderes Ende das Wasser eingespeist und an deren hinterem Ende sich eine Stauzone befindet. Hinter der Stauzone befindet sich auch die Entnahmestelle für das Wasser zusammen mit den Verunreinigungen. Innerhalb der Extraktionszone bildet sich ein Druckprofil aus,wobei am vorderen Ende der Extraktionszone die Drucke des zweiten Schrittes des erfindungsgemäßen Verfahrens erreicht werden, die am hinteren Ende auf die Drucke des dritten Schrittes abfallen. An die Extraktionszone schließt sich im allgemeinen eine Mischzone an, in der der Polyarylenetherschmelze Additive wie Stabilisatoren oder Füllstoffe zugegeben werden können. Anstelle die Additive oder Füllstoffe bzw. deren Mischungen in einer Mischzone zuzugeben, können diese auch in der Extraktionszone zugegeben werden. Im Allgemeinen erfolgt die Zugabe der Additive bzw. Füllstoffe nach der Wasserzugabe. Bevorzugt wird jedoch die Zugabe in einer Mischzone. Selbstverständlich befindet sich am Extruderende eine Einheit, meist eine Düse, mittels derer die Polyarylenetherschmelze ausgetragen und falls gewünscht granuliert oder sofort, beispielsweise zu Formteilen verarbeitet werden kann.

Die nach dem erfindungsgemäßen Verfahren gereinigten Polyarylenether weisen im allgemeinen Chloridgehalte bis maximal 100 ppm, bezogen auf die Polyarylenether, auf. Die Chloridgehalte liegen in der Regel von 5 bis 95 ppm, betragen aber meist von 10 bis 90 ppm, jeweils bezogen auf die Polyarylenether. Es können auch niedrigere Chloridgehalte erzielt werden, beispielsweise bis 1 ppm.

Die nach dem erfindungsgemäßen Verfahren gereinigten Polyarylenether können auch faser- oder teilchenförmige Füllstoffe enthalten. Hierzu zählen vor allem Kohlefasern, Glasfasern, Kaliumtitanatfasern, Eisenoxidnanofasern oder Metallfasern wie Stahlfasern. Als teilchenförmige oder plättchenförmige Füllstoffe sind insbesondere Glimmer, Wollastonit, Tonerden, Glasflocken oder Glaskugeln zu nennen.

Daneben können die nach dem erfindungsgemäßen Verfahren gereinigten Polyarylenether noch weitere Zusatzstoffe und/oder Verarbeitungshilfsmittel enthalten. Darunter seien Pigmente, Flammschutzmittel wie Phosphorsäureester oder UV-Stabilisatoren, z.B. Ruß, Titandioxid, Fluorpolymere oder Molsieb genannt. Polyarylenether, die nach dem erfindungsgemäßen Verfahren gereinigt wurden, und die Füllstoffe oder Additive oder deren Mischungen enthalten, weisen im allgemeinen Chloridionengehalte von über 60 ppm, meist jedoch nicht mehr als 120 ppm, bezogen auf die Polyarylenether, auf.

Die nach dem erfindungsgemäßen Verfahren gereinigten, gewünschtenfalls weitere Additive enthaltenden Polyarylenether eignen sich zur Herstellung von Formkörpern, Profilen, Halbzeugen, Folien, Fasern oder Pulvern für weitere Anwendungen. Sie zeichnen sich insbesondere durch gute Fließfähigkeit, hervorragende Schmelzestabilität, helle Eigenfarbe und niedrige Chloridionengehalte aus.

### Beispiele

### Herstellung eines niedrig viskosen Polyarylenetherketons A

875,6 g (6,56 mol) Aluminiumchlorid wurden in 1254 ml Methylenchlorid suspendiert und auf -15^{o}C gekühlt. Dazu wurden unter Kühlung 169,4 g (1,8 mol) Dimethylsulfon, 243,6 g (1,2 mol) Terephthaloylchlorid, 6,74 g (0,048 mol) Benzoylchlorid und 448,4 g (1,224 mol) Diphenoxybenzophenon gegeben. Die Temperatur wurde langsam auf ca. 18^{o}C erhöht, wobei der Druck im Reaktionsgefäß auf ca. 10 bar anstieg. Anschließend wurde die Reaktionsmasse in ein zweites Reaktionsgefäß entspannt und nach einer Verweilzeit von 7 Stunden bei 25^{o}C in Wasser ausgetragen, um den Katalysatorkomplex zu hydrolysieren. Anschließend wurde das Polyarylenetherketon mehrfach mit Wasser extrahiert und im Vakuum bei 280^{o}C getrocknet.

Es wurde ein flockenförmiges (Korngröße 1,5 mm) Polymer mit wiederkehrenden Einheiten der Struktur 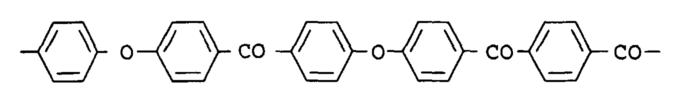 erhalten. Die inherente Viskosität, gemessen bei einer Konzentration von 5 g/l bei 25^{o}C in 96 gew.-%iger Schwefelsäure nach DIN 53735 betrug 104 ml/g und der Schmelzvolumenindex (MVI), gemessen bei 400^{o}C/10 kg/4 min, betrug 230 ml/10 min. Der Chloridgehalt betrug 190 ppm, bezogen auf das Polyarylenetherketon.

Herstellung eines hochviskosen Polyarylenetherketons B erfolgte in analoger Weise, jedoch wurden 445,2 g Diphenoxybenzophenon (1,215 mol) und 4,22 g (0,03 mol) Benzoylchlorid verwendet.

### Reinigung der Polyarylenetherketone

Das hochviskose Polyarylenetherketon A wurde in einem Zweischneckenkneter (z.B. ZKS 53 der Firma Werner und Pfleiderer) in der Schmelzzone auf 390^{o}C aufgewärmt. In der sich anschließenden Extraktionszone mit einer stark knetenden Schnecke wurde eine erfindungsgemäße Menge Wasser zugegeben. Der Druck betrug ca. 4 bar. Nach einer Verweilzeit von ca. 1,5 Minuten wurde das Wasser zusammen mit den Verunreinigungen bei einem Druck von 100 mbar entfernt. In einer sich anschließenden Mischzone konnte das Molsieb zugegeben werden.

Entsprechend wurde das niedrigviskose Polyarylenetherketon B gereinigt, allerdings wurde eine schwach knetende Schnecke verwendet.

Zum Vergleich wurde ohne Zugabe von Wasser extrudiert oder eine nicht erfindungsgemäße Menge Wasser in die Schmelze gegeben. In einem weiteren Vergleichsversuch wurde eine erfindungsgemäße Menge Wasser nicht zur Schmelze gegeben sondern bereits vor dem Aufschmelzen zugegeben.

Die Ergebnisse der Versuche sind den Tabellen zu entnehmen.

Der Chloridgehalt wurde durch Verbrennungsanalyse mit anschließender potentiometrischer Titration bestimmt.

Der Siliziumgehalt wurde durch Atomabsorptionsspektroskopie ermittelt.

Als Maß für die Schmelzestabilität wurde der Betrag der Differenz des Schmelzvolumenindexes, ΔMVI = MVI[420°C/21,6 kg, gemessen nach 4'Standzeit] - MVI [420°C/21,6 kg, gemessen nach 14'Standzeit] gemessen.

**Tabelle 1**

| Reinigung des Polyarylenetherketons A | | | | | |
|---|---|---|---|---|---|
| Bsp. Nr | H20 [%] | Zugabeart | Additiv [%] | Cl [ppm] | MVI |
| 1 | 1 | Schmelze | 0,5 | 120 | 2 |
| 2 | 1 | Schmelze | 0 | 84 | 4 |
| V1 | 1 | Flocken | 0,5 | 130 | 10 |
| V2 | 1 | Flocken | 0 | 77 | 12 |
| V3 | 0 | / | 0,5 | 120 | 21 |

**Tabelle 2**

| Reinigung des Polyarylenetherketons B | | | | | |
|---|---|---|---|---|---|
| Bsp. Nr | H20 [%] | Zugabeart | Additiv [%] | Cl [ppm] | MVI |
| 3 | 1 | Schmelze | 0,5 | 110 | 1 |
| 4 | 1 | Schmelze | 0 | 90 | 12 |
| V4 | 2 | Schmelze | 0,5 | 100 | 28 |
| V5 | 3 | Schmelze | 0,5 | 100 | 38 |
| V6 | 0 | / | 0,5 | 110 | 23 |

## Patentansprüche

1. Verfahren zur Reinigung von Polyarylenethern, dadurch gekennzeichnet, daß man in einem ersten Schritt eine Polyarylenetherschmelze herstellt, in einem zweiten Schritt zu dieser bis zu 1,5 Gew.-% Wasser, bezogen auf die Polyarylenetherschmelze, zugibt und in einem dritten Schritt das Wasser zusammen mit den Verunreinigungen entfernt.

2. Verfahren nach Anspruch 1, dadurch gekennzeichnet , daß man bis zu 1 Gew.-% Wasser zugibt.

3. Verfahren nach Anspruch 1 oder 2, dadurch gekennzeichnet, daß man den zweiten Schritt unter Druck und den dritten Schritt drucklos oder mit vermindertem Druck ausführt.

4. Verfahren nach einem der Ansprüche 1 bis 3, dadurch gekennzeichnet, daß man die Verfahrensschritte in einem Extruder ausführt.

5. Verfahren nach einem der Ansprüche 1 bis 4, dadurch gekennzeichnet, daß man als Polyarylenether Polyarylenetherketone verwendet.
